# EUROPÄISCHE PATENTSCHRIFT

(11) **EP 0 641 592 B1**
(45) Veröffentlichungstag und Bekanntmachung des Hinweises auf die Patenterteilung: **20.01.1999**
(21) Anmeldenummer: 94202109.8
(22) Anmeldetag: 19.07.1994
(51) Int. Cl.: B01D 53/26, B01D 53/28, B01J 20/02, B01J 20/30

(54) **Verwendung einer Adsorbermasse zur Entfernung von Wasserdampf aus Gasen**
Use of an adsorbent for removing water vapour from gases
Utilisation d'un adsorbant pour l'élimination de vapeur d'eau d'un gaz

(30) Priorität: 06.09.1993 DE 4330081
(43) Veröffentlichungstag der Anmeldung: 08.03.1995
(73) Patentinhaber: MESSER GRIESHEIM GMBH, 60547 Frankfurt (DE)
(72) Erfinder: Hamm, Reiner, Dr., D-47506 Neukirchen-Vluyn (DE); Schneider, Valentin, D-47228 Duisburg (DE)

(56) Entgegenhaltungen:
- EP-A- 0 248 224
- DE-B- 1 667 129
- PATENT ABSTRACTS OF JAPAN vol. 012, no. 165 (C-496) 18. Mai 1988 & JP-A-62 277 148 (TORAY IND INC;OTHERS: 01) 2. Dezember 1987

## Beschreibung

Die Erfindung betrifft eine Verwendung der aus DE-B-1 667 129 bekannten Adsorbermasse zur Entfernung von aus Gasen Wasserdampf.

Die Trocknung von Gasen durch Verwendung feuchtigkeitsaufnehmender Chemikalien ist hinlänglich bekannt. Es besteht jedoch ein zunehmendes Interesse bei der Trocknung von Inert- und Edelgasen, die Feuchtebelegung der verwendeten Chemikalien auch sichtbar zu machen.

Der Erfindung liegt daher die Aufgabe zugrunde, die Belegung des Adsorptionsmittels mit Wasserdampf präzise anzuzeigen.

Diese Aufgabe wird durch die Merkmale von Anspruch 1 gelöst.

Vorteilhafte Weiterbildungen der Erfindung sind in den Unteransprüchen angegeben.

Das für das erfindungsgemäße Verfahren verwendete Adsorptionsmittel ist aus der DE-PS 16 67 129 bekannt. Die in dieser Patentschrift beschriebene Masse dient zur Beseitigung überwiegend reaktiver Beimengungen aus Gasen und Flüssigkeiten. Sie ist besonders wirksam bei der Entfernung von Sauerstoff, wenn das Trägermaterial mit chromhaltigen Komponenten belegt ist. Es ist überraschend, daß mit dieser Masse auch Wasser aus Gasen hochwirksam entfernt werden kann unter Ausbildung eines deutlichen Farbumschlages. So zeigt beispielsweise eine chromhaltige Masse in unbelegtem Zustand eine blaue Farbe. Bei Belegung mit Feuchtigkeit erfolgt ein Farbumschlag nach rot-lila.

Für die erfindungsgemäße Verwendung werden bevorzugt durchsichtige Patronen verwendet, welche mit dem Adsorptionsmittel gefüllt sind. Die Patrone enthält dann ein selbstanzeigendes Feuchte-Adsorbens. Das Adsorptionsmittel kann aber auch anderen Feuchte-Adsorbentien als Farbindikator beigemengt werden.

Die hohe Wirksamkeit des erfindungsgemäßen Verfahrens zeigt das nachfolgend beschriebene Versuchsbeispiel. Als Adsorptionsmittel wurde eine chromhaltige Masse mit Silicagel als Trägermaterial verwendet. Durch eine mit diesem Adsorptionsmittel gefüllte durchsichtige Patrone wurde ein Inertgas geleitet, welches mit Spuren von Wasserdampf (50 ppm und 3 ppm) beladen war. Vom Eingang der Patrone her fortschreitend färbte sich das zuvor blaue Adsorptionsmittel rot-lila. Hinter der Patrone wurde mit einem Hygrometer der Feuchtegehalt kontrolliert. Als die Farbgrenze den Patronenausgang erreichte, wurde zeitgleich der Feuchtedurchbruch registriert. Hierbei zeigte sich, daß die experimentell ermittelte Feuchtekapazität fast gleich jener des als Trägermaterial verwendeten Silicagels ist.

## Patentansprüche

1. Verwendung einer Masse, die aus einer aktiven eisen-, nickel-, rhenium-, titan-, mangan-, vanadium-, molybdän- und/oder chromhaltigen Komponente auf einem wärmebeständigen oxidischen Träger mit großer Oberfläche besteht und die bei 300 bis 600° C mit molekularem Sauerstoff aktiviert und anschließend mit einem reduzierenden Gas bei einer Temperatur zwischen 200° C bis unterhalb der jeweiligen Aktivierungstemperatur behandelt wurde, als Farbindikator zur Anzeige der Belegung mit Wasserdampf bei der Entfernung von Wasserdampf aus Inertgasen.

2. Verwendung nach Anspruch 1, dadurch gekennzeichnet, daß die Masse anderen Feuchte-Adsorbentien beigemengt wird.

3. Verwendung nach Anspruch 1 oder 2, dadurch gekennzeichnet, daß die Masse bei Inertgasen eingesetzt wird, die Wasserdampf im ppm-Bereich enthalten.

4. Verwendung nach einem der Ansprüche 1 bis 3, dadurch gekennzeichnet, daß die Masse Silicagel als oxidischen Träger enthält.

5. Verwendung nach einem der Ansprüche 1 bis 4, dadurch gekennzeichnet, daß die Inertgase durch eine mit der Masse gefüllte Patrone mit durchsichtiger Wand geleitet werden.

## Claims

1. Use of a mass, iron-, nickel-, rhenium-, preferably titanium-, manganese-, vonadium-, molybdenum- and/or chromium -containing component on a heat-resistant oxidic support having a large surface area and which has been activated at 300 to 600 °C with molecular oxygen and then treated with a reducing gas at a temperature from 200 °C to below the particular activation temperature, as a color indicator for showing the loading of the mass with water vapour when water vapour is removed from inert gases.

2. Use as claimed in claim 1, wherein the mass is mixed with other moisture adsorbents.

3. Use as claimed in claim 1 or 2, wherein the mass is used for inert gases, which contain water vapour in the ppm-range.

4. Use as claimed in claims 1 to 3, wherein the mass contains silica gel as an oxidic support.

5. Use as claimed in claims 1 to 4, wherein the inert gases are passed through a cartridge hering a transparent wall and which is filled with the mass.

## Revendications

1. Utilisation d'une masse qui est constituée d'un composant contenant du fer, du nickel, du rhénium, du titane, du manganèse, du vanadium, du molybdène et/ou du chrome actif sur un support pour oxydation résistant à la chaleur présentant une grande surface et qui est activé entre 300 et 600°C avec de l'oxygène moléculaire puis traité avec un gaz réducteur à une température allant de 200°C jusqu'en dessous de la température d'activation considérée, comme indicateur de couleur pour mise en évidence d'un revêtement avec de la vapeur d'eau lors de l'élimination de la vapeur d'eau des gaz inertes.

2. Utilisation selon la revendication 1,
caractérisée en ce qu'
on ajoute à la masse d'autres adsorbants d'humidité.

3. Utilisation selon la revendication 1 ou 2,
caractérisée en ce qu'
on utilise la masse dans des gaz inertes qui contiennent de la vapeur d'eau en une quantité de l'ordre de la ppm.

4. Utilisation selon l'une des revendications 1 à 3, caractérisée en ce que
la masse contient du gel de silice comme support pour oxydation.

5. Utilisation selon l'une des revendications 1 à 4,
caractérisée en ce qu'
on conduit les gaz inertes à travers une cartouche à parois transparentes remplie de la masse.
